# EUROPÄISCHE PATENTANMELDUNG

(11) **EP 3 011 879 A1**
(43) Veröffentlichungstag der Anmeldung: **27.04.2016**
(21) Anmeldenummer: 15189256.9
(22) Anmeldetag: 12.10.2015
(51) Int. Cl.: A47J 43/07

(54) **KÜCHENMASCHINE MIT KÜHLEINRICHTUNG**

(30) Priorität: 21.10.2014 DE 102014115322
(71) Anmelder: Vorwerk & Co. Interholding GmbH, 42275 Wuppertal (DE)
(72) Erfinder: Heider, Uwe, 50354 Hürth (DE)
(74) Vertreter: Müller, Enno

(57) **Zusammenfassung**

Die Erfindung betrifft eine Küchenmaschine (1), insbesondere Mixgerät, mit einem Gehäuse (2), einer Wärmequelle (3), insbesondere einem Motor oder einer Geräteelektronik, und einer Kühleinrichtung (4). Um eine Verschmutzung der Küchenmaschine (1) zu vermeiden und eine verbesserte Schalldämpfung zu erreichen, wird vorgeschlagen, dass die Wärmequelle (3) mit einem gesondert von dieser Wärmequelle (3) angeordneten, einen Teilbereich einer Außenfläche des Gehäuses (2) bildenden Wärmetauscherelement (5) der Kühleinrichtung (4) verbunden ist, wobei das Wärmetauscherelement (5) derart ausgebildet ist, dass es von der Wärmequelle (3) abzuführende Wärme durch natürliche Konvektion an die Umgebung abgeben kann.

## Beschreibung

Die Erfindung betrifft eine Küchenmaschine, insbesondere ein Mixgerät, mit einem Gehäuse, einer Wärmequelle, insbesondere einem Motor oder einer Geräteelektronik, und einer Kühleinrichtung.

Küchenmaschinen der in Rede stehenden Art sind bekannt, so insbesondere in Form von elektromotorisch betriebenen Küchenmaschinen für den Haushaltsbereich, beispielsweise sogenannte Kochmixer. Derartige Küchenmaschinen weisen ein bevorzugt von dem Maschinengrundgehäuse abnehmbares Gefäß, insbesondere Rührgefäß, auf, in welchem beispielsweise bodenseitig ein Rührwerk angeordnet sein kann. Das Rührwerk kann über einen maschinenseitig vorgesehenen, mit dem Rührwerk kuppelbaren Elektromotor angetrieben werden. Eine solche Küchenmaschine ist in der Druckschrift DE 10 2010 017 335 A1 offenbart.

Darüber hinaus ist es im Stand der Technik ebenfalls bekannt, Kühleinrichtungen für derartige Küchenmaschinen vorzusehen. Diese Kühleinrichtungen weisen beispielsweise ein Kühlgebläse auf, welches Umgebungsluft außerhalb der Küchenmaschine ansaugt und zum Zwecke der Kühlung zu den wärmeerzeugenden Elementen, beispielsweise dem Motor oder der Geräteelektronik, leitet. Damit die Kühlluft in die Küchenmaschine eintreten und nach dem Kühlvorgang wieder aus dieser austreten kann, weist das Gehäuse Ansaugöffnungen und Ausblasöffnungen auf.

Daneben sind auch Kühleinrichtungen für Küchenmaschinen bekannt, mit deren Hilfe ein Gefäß bzw. die in dem Gefäß enthaltenen Speisen gekühlt werden können. Die WO 2007/135130 A1 betrifft beispielsweise eine Küchenmaschine zur Zubereitung von Speiseeis mit einem zur Vereisung seines Inhaltes geeigneten Gefäß, dessen Wandung zur Kälteerzeugung ein erstes Peltier-Element zugeordnet ist. Dieses Peltier-Element wird auf seiner Heißseite mittels eines Wärmeübertragungsmediums aktiv gekühlt, wobei dieses Wärmeübertragungsmedium wiederum in einem gesonderten Kühlkreislauf geführt ist, und wobei dem Kühlkreislauf wiederum ein gesondertes zweites Peltier-Element zugeordnet ist. Die Kaltseite des zweiten Peltier-Elementes ist dem Kühlkreislauf zugewandt, während die Heißseite mit Kühlrippen versehen ist.

Bei den vorgenannten Kühleinrichtungen ergeben sich Nachteile dadurch, dass für die Abführung der Wärme zumindest des zweiten Peltier-Elementes aus dem Gehäuse der Küchenmaschine Ansaugöffnungen bzw. Ausblasöffnungen benötigt werden, durch welche Staub und Schmutz in die Küchenmaschine eintreten und sich dort ablagern können. Darüber hinaus entsteht durch gegebenenfalls vorhandene Kühlgebläse und die damit verbundene Luftströmung ein Eigengeräusch der Küchenmaschine, welches durch die Ansaug- und Ausblasöffnungen aus dem Gehäuse austreten kann.

Es ist daher Aufgabe der vorliegenden Erfindung, eine Küchenmaschine mit einer Kühleinrichtung zu schaffen, bei welcher die vorgenannten Nachteile der Verschmutzung bzw. der Schallemission vermieden werden.

Zur Lösung der vorgenannten Aufgabe schlägt die Erfindung eine Küchenmaschine vor, bei welcher die Wärmequelle mit einem gesondert von dieser Wärmequelle angeordneten, einen Teilbereich einer Außenfläche des Gehäuses bildenden Wärmetauscherelement der Kühleinrichtung verbunden ist, wobei das Wärmetauscherelement derart ausgebildet ist, dass es von der Wärmequelle abzuführende Wärme durch natürliche Konvektion an die Umgebung abgeben kann.

Die erfindungsgemäße Küchenmaschine verzichtet auf den Einsatz eines Kühlgebläses und macht von Wärmetauscherelementen Gebrauch, welche die Wärme der Wärmequelle abführen, ohne dabei eine Luftströmung zu erzwingen. Die Wärmeabfuhr von der Wärmequelle erfolgt ausschließlich mittels natürlicher Konvektion und/oder Wärmeleitung. Insbesondere bildet das Wärmetauscherelement einen Teil einer Außenfläche des Gehäuses, welche unmittelbar in Kontakt mit der Umgebungsluft steht. Ansaugöffnungen und/ oder Ausblasöffnungen innerhalb des Gehäuses der Küchenmaschine sind nicht erforderlich. Folglich wird das Eintreten von Staub oder Schmutz in die Küchenmaschine verhindert bzw. reduziert. Durch den Entfall eines Kühlgebläses bzw. der damit verbundenen erzwungenen Luftströmung wird zusätzlich die Geräuschemission der Küchenmaschine reduziert.

Erfindungsgemäß erfolgt die Wärmeabfuhr ausgehend von den warmen Bereichen innerhalb der Küchenmaschine, nämlich den Wärmequellen, in Richtung einer Außenfläche des Gehäuses. Das Wärmetauscherelement kann beispielsweise einen Teilbereich des Bodens des Maschinengehäuses bilden, oder alternativ auch eine Wandung. Es muss nicht berücksichtigt werden, dass Ansaug-/ Ausblasöffnungen freiliegen.

Beispielsweise kann das Wärmetauscherelement eine Metallplatte aufweisen. Diese Metallplatte weist vorteilhaft eine möglichst große Wärmeleitfähigkeit auf, so dass sich insbesondere die Verwendung von Aluminium- oder Kupferplatten empfiehlt. Die Metallplatte kann eine ebene Platte sein. Bevorzugt ist diese ggf. mit Kühlrippen ausgestattet, um die effektive wärmetauschende Oberfläche zu erhöhen.

Es wird vorgeschlagen, dass das Wärmetauscherelement gehäuseförmig, insbesondere als einseitig offener Topf, ausgebildet ist, wobei die Wärmequelle zumindest teilweise von dem gehäuseförmigen Wärmetauscherelement umgeben ist. Durch diese Ausgestaltung sind mehrere Teilflächen des Wärmetauscherelementes zu der Wärmequelle benachbart, so dass die Wärme gleichermaßen gut von mehreren Seiten der Wärmequelle auf das Wärmetauscherelement übertragen werden kann. Falls es sich bei der Wärmequelle beispielsweise um einen Motor handelt, kann das Wärmetauscherelement an die Form der Wärmequelle angepasst sein, so dass der Abstand zwischen der Wärmequelle und den Flächen des Wärmetauscherelementes besonders gering ist.

Gemäß der Erfindung bildet zumindest ein Teilbereich des Wärmetauscherelementes, beispielsweise eine Fläche des gehäuseförmigen Wärmetauscherelementes, einen Teil einer Außenfläche des Gehäuses. Dabei übernimmt die Gehäusefläche als Teil des Gehäuses zum einen die Funktion der Begrenzung der Küchenmaschine und zum anderen die Funktion eines Wärmetauscherelementes. Dadurch wird zum einen Material gespart und zum anderen eine optimale Wärmeabfuhr ausgehend von dem Innenbereich des Gehäuses der Küchenmaschine nach außen erreicht. Es ist möglich, dass beispielsweise der Boden und/oder eine oder mehrere Wandungen des Gehäuses durch ein Wärmetauscherelement gebildet sind. Je größer die Fläche ist, desto besser ist auch die Leistungsfähigkeit des Wärmetauscherelementes.

Es wird vorgeschlagen, dass die Wärmequelle mittels eines wärmeübertragenden Elementes, insbesondere mittels eines wärmeleitenden Elementes oder eines Wärmerohres, mit dem Wärmetauscherelement verbunden ist. Gemäß dieser Ausgestaltung ist eine effektive Übertragung der Wärme von dser Wärmequelle auf das Wärmetauscherelement unabhängig von dem Abstand zwischen Wärmequelle und Wärmetauscherelement möglich. Eine ggf. isolierende Luftschicht zwischen der Wärmequelle und dem Wärmetauscherelement wird dadurch überbrückt, dass ein wärmeübertragendes Element vorgesehen ist. Dieses wärmeübertragende Element kann ein Wärmeleiter mit einer großen Wärmeleitfähigkeit, wie beispielsweise Gold, Silber oder Kupfer sein. Beispielsweise können aus einem solchen Material hergestellte Stege einerseits an dem wärmeerzeugenden Element und andererseits an dem Wärmetauscherelement angeordnet sein. Alternativ empfiehlt sich der Einsatz eines Wärmerohres (Heatpipe) als wärmeübertragendes Element. Das Wärmerohr ist mit einem Arbeitsmedium wie beispielsweise Wasser oder Ammoniak gefüllt, welches zu einem kleinen Teil in flüssigem und zu einem größeren Teil in dampfförmigem Zustand vorliegt. Das Wärmerohr weist Wärmeübertragungsflächen auf, welche mit der Wärmequelle, beispielsweise dem Motor und dem Wärmetauscherelement verbunden sind. Bei Wärmeeintrag durch die Wärmequelle verdampft das Arbeitsmedium. Dadurch wird der Druck im Dampfraum des Wärmerohres lokal erhöht, was zu einem Druckgefälle innerhalb des Wärmerohres führt. Dadurch strömt der Dampf in Richtung der Wärmesenke (Wärmetauscherelement), wo er aufgrund der niedrigeren Temperatur kondensiert. Dabei wird die Wärme an das Wärmetauscherelement abgegeben und mit der Umgebungsluft getauscht. Das nunmehr flüssige Arbeitsmedium kehrt durch Kapillarkräfte zurück in seine Ausgangsposition, d.h. in den Bereich der Wärmequelle. Durch die Nutzung der Verdampfungswärme des Arbeitsmediums erlaubt das Wärmerohr eine große Wärmestromdichte, d.h. auf einer geringen Querschnittsfläche können große Wärmemengen transportiert werden. Dadurch kann die Wärme optimal von der Wärmequelle der Küchenmaschine wegtransportiert werden.

Im Sinne der Erfindung kann es vorgesehen sein, dass die Kühleinrichtung eine Absorptionskältemaschine mit einem Verdampfer, einem Verflüssiger und mindestens einem Heizelement ist, wobei der Verdampfer und der Verflüssiger Teile des Wärmetauscherelementes sind. Gemäß dieser Ausführungsform erfolgt die Kühlung der Wärmequelle der Küchenmaschine nach dem Prinzip einer Absorberkühlung. Dabei werden die Vorteile eines Wärmekreislaufes genutzt, ohne gleichzeitig einen schallerzeugenden Kompressor einsetzen zu müssen. Die Absorptionskältemaschine entzieht der Wärmequelle der Küchenmaschine, wie beispielsweise dem Motor und/ oder der Geräteelektronik, Wärme und leitet diese an die Umgebung ab.

Die Absorberkältemaschine arbeitet vorteilhaft mit einem Wasser-Ammoniak-Gemisch. Das Wasser-Ammoniak-Gemisch wird durch Beaufschlagung mit Wärmeenergie in Ammoniak und Wasser getrennt. Direkt nach dem Anschalten der Küchenmaschine ist die Wärmequelle (Motor, Elektronik) noch nicht ausreichend warm, so dass die benötigte Wärmeenergie durch ein separates Heizelement bereitgestellt wird. Das flüssige Wasser und das gasförmige Ammoniak werden anschließend über verschiedene Rohrsysteme weitergeleitet, wobei das Ammoniak mittels des Verflüssigers wieder verflüssigt wird. Die bei der Kondensation freigesetzte Wärme wird an die Umgebung abgegeben, beispielsweise mittels eines einen Teil der Außenfläche des Gehäuses der Küchenmaschine bildenden Wärmetauscherelementes. Anschließend wird das Ammoniak wieder mit dem Wasser zusammengeführt, so dass ein Kühlvorgang durch Erhitzen des Ammoniak-Wasser-Gemisches mittels der Wärme der Wärmequelle ausgelöst werden kann. Sobald die Wärmequelle entsprechend aufgeheizt ist, stellt diese die Wärme für den Verdampfungsprozess zur Verfügung, so dass die separate Heizung abgeschaltet werden kann. Der im Bereich der Wärmequelle vorgesehene Verdampfer entzieht der Wärmequelle die für die Verdampfung des Ammoniaks notwendige Wärme. Dadurch wird die Wärmequelle gekühlt. Besonders vorteilhaft ist dabei, dass für die Absorptionskältemaschine keine bewegten Teile eingesetzt werden müssen. Insofern funktioniert der Wärmekreislauf praktisch lautlos.

Das separate Heizelement kann beispielsweise eine Induktionsheizung, eine Widerstandsheizung oder auch ein Peltier-Element sein. Wie zuvor erläutert, ist dieses für die Anlaufphase des Verdampfungsprozesses vorzusehen, in welcher die Wärmequelle, beispielsweise der Motor oder die Geräteelektronik, noch keine ausreichende Temperatur aufweisen, um die Trennung des Wasser-Ammoniak-Gemisches zu bewirken. Insofern empfiehlt es sich, dass das Heizelement der Absorptionskältemaschine in der Anlaufphase des Verdampfungsprozesses selbständig heizt und nach ausreichender Erhitzung der Wärmequelle abgeschaltet wird.

Vorteilhaft ist der Verflüssiger und/oder der Verdampfer rohrförmig ausgebildet. Durch diese Ausgestaltung stellt das Wärmetauscherelement zum einen Rohrleitungen für die Führung des Ammoniaks bzw. Wassers zur Verfügung, und funktioniert zum anderen als zylindrisches Wärmetauscherelement, welches die Wärme des in ihm enthaltenen Mediums an die Umgebung abgeben kann. Der Verflüssiger, welcher während des Kondensationsvorgangs Wärme abgibt, bildet vorteilhaft einen Teil einer Außenfläche des Gehäuses der Küchenmaschine, so dass die Wärme besonders effektiv an die Umgebungsluft übertragen werden kann.

Schließlich wird vorgeschlagen, dass der Verdampfer einem Gefäß der Küchenmaschine derart zugeordnet ist, dass in dem Gefäß enthaltene Speisen kühlbar sind. Insofern handelt es sich bei der Kühleinrichtung nicht nur um eine Kühleinrichtung zur Kühlung einer oder mehrerer Wärmequellen wie beispielsweise Motor und Geräteelektronik der Küchenmaschine, sondern vielmehr auch (alternativ oder ergänzend) um eine Einrichtung zur Kühlung in einem Gefäß enthaltener Speisen. Insofern kann die Küchenmaschine insgesamt auch zur Herstellung solcher Speisen verwendet werden, welche eine Kühlung erfordern, beispielsweise Speiseeis. Ebenso kann die Küchenmaschine auch eingesetzt werden, um Speisen, welche eine Kühlung benötigen, kurzfristig zu lagern. Die erfindungsgemäße Kühleinrichtung für eine Küchenmaschine kann somit unterschiedliche Elemente der Küchenmaschine kühlen, zum einen die Wärmequelle, zum anderen auch ein Gefäß der Küchenmaschine.

Darüber hinaus empfiehlt es sich auch, die erfindungsgemäße Kühleinrichtung in Kombination mit einer zur Erwärmung des Gefäßes vorgesehenen Induktionsheizung zu betreiben, so dass die Wärmeabstrahlung der Küchenmaschine nach außen insgesamt sehr gering ist.

Im Folgenden wird die Erfindung anhand zweier Ausführungsbeispiele näher erläutert. Es zeigen:

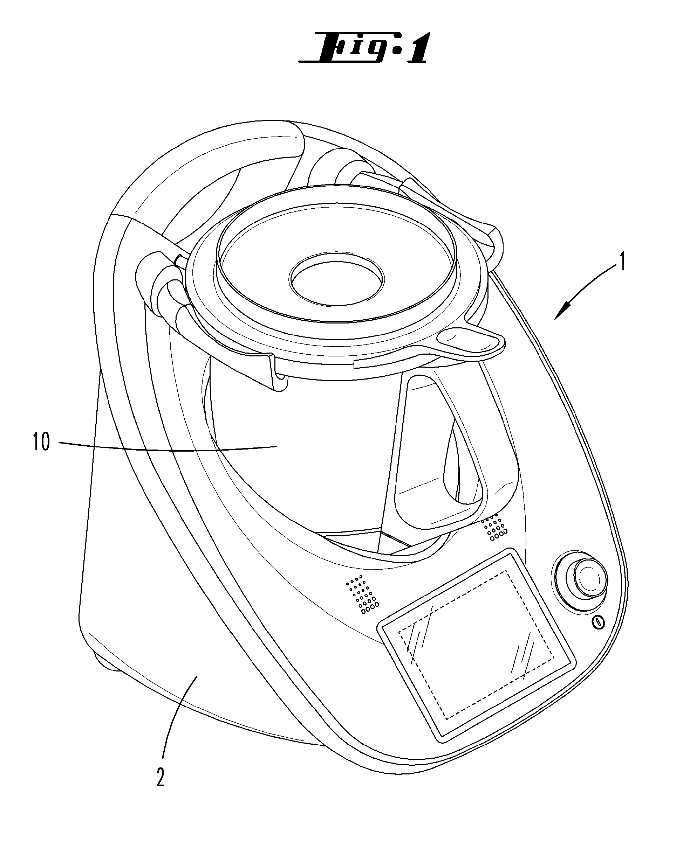

- Figur 1:: Eine gattungsgemäße Küchenmaschine in einer perspektivischen Ansicht,
- Figur 2:: die Küchenmaschine in einer ersten Ausführungsform (Schnittdarstellung),
- Figur 3:: die Küchenmaschine in einer zweiten Ausführungsform (Schnittdarstellung).

Die gezeigte Küchenmaschine 1 ist beispielhaft als Koch-Mixgerät ausgeführt, jedoch kann es sich grundsätzlich um jede Art Küchenmaschine handeln, welche Wärmequellen wie beispielsweise einen Elektromotor aufweist.

Die Küchenmaschine 1 weist ein Gehäuse 2 auf, in welchem beispielsweise eine Aufnahme für ein Gefäß 10, ein Motor 12, ein Rührwerk 13 und ähnliches vorgesehen sind. Darüber hinaus kann in dem Gehäuse 2 ebenfalls ein Display, ein Bedienfeld und ähnliches vorgesehen sein.

Der Küchenmaschine 1 ist ein Gefäß 10 zugeordnet, welches hier in eine Gefäßaufnahme des Gehäuses 2 eingesetzt ist. Dem Gefäß 10 ist das Rührwerk 13 zugeordnet, welches über den in der Küchenmaschine 1 unterhalb der Gefäßaufnahme angeordneten Motor 12 sowie eine Elektronik 11 (Wärmequellen 3) betrieben wird.

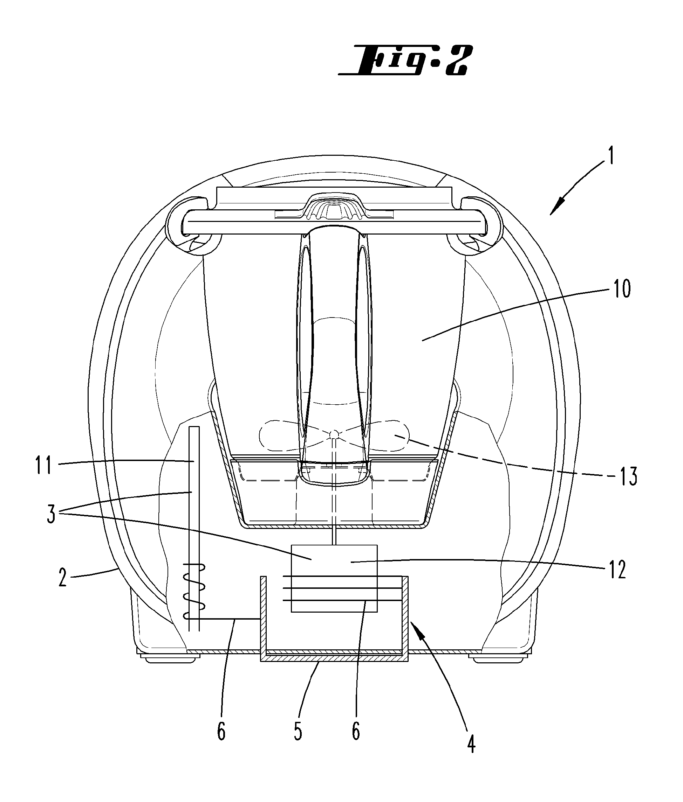

Gemäß dem in Figur 2 gezeigten Ausführungsbeispiel weist die Küchenmaschine 1 zumindest zwei Wärmequellen 3, nämlich den Motor 12 und eine Elektronik 11, auf. Den Wärmequellen 3 ist eine Kühleinrichtung 4 zugeordnet, welche ein Wärmetauscherelement 5 sowie zwei wärmeübertragende Elemente 6 aufweist. Das Wärmetauscherelement 5 ist gehäuseförmig, nämlich topfförmig, ausgebildet, wobei die Wärmequelle 3, nämlich der Motor 12, teilweise davon umgeben ist. Der Bodenbereich des gehäuseförmigen Wärmetauscherelementes 5 bildet einen Teil einer Außenfläche des Gehäuses 2 der Küchenmaschine 1. Dabei durchgreift das Wärmetauscherelement 5 den Bodenbereich des Gehäuses 2 der Küchenmaschine 1. Das Wärmetauscherelement 5 besteht im Wesentlichen aus ebenen Metallplatten, welche in der Form eines Topfes miteinander verbunden, insbesondere verschweißt, sind. Zwischen dem Wärmetauscherelement 5 und den Wärmequellen 3 ist jeweils ein wärmeübertragendes Element 6 angeordnet, welches hier als Wärmerohr (Heatpipe) ausgebildet ist. Das wärmeübertragende Element 6 kontaktiert die Wärmequelle 3 dabei vorteilhaft entlang einer möglichst großen Fläche. Es empfiehlt sich insbesondere, dass das wärmeübertragende Element 6 schlaufen- oder spiralförmig um die Wärmequelle 3 herum geführt ist.

Die Kühleinrichtung 4 gemäß Figur 2 funktioniert so, dass bei der Zubereitung einer Speise innerhalb des Gefäßes 10 der Küchenmaschine 1 Wärme an den Wärmequellen 3, nämlich dem Motor 12 und der Elektronik 11, entsteht. Diese Wärme wird über die Kontaktstellen zwischen den Wärmequellen 3 und den wärmeübertragenden Elementen 6, nämlich den Wärmerohren, an die Kühleinrichtung 4 übertragen. Die wärmeübertragenden Elemente 6 beinhalten gemäß deren Ausbildung als Wärmerohr ein Arbeitsmedium, welches aufgrund des Wärmeeintrages von den Wärmequellen 3 verdampft wird. Dadurch erhöht sich der Druck innerhalb des Rohres, was zu einem Druckgefälle entlang des Rohres führt. Der Dampf strömt daraufhin in Richtung des von der Wärmequelle 3 abgewandten Endes des wärmeübertragenden Elementes 6, nämlich in den Bereich des Wärmetauscherelementes 5. Das Wärmetauscherelement 5 funktioniert aufgrund seiner gegenüber der Wärmequelle 3 niedrigeren Temperatur als Wärmesenke, so dass der in dem Wärmerohr enthaltene Dampf kondensiert. Dabei wird die zuvor aufgenommene Wärme an die Umgebungsluft des Wärmetauscherelementes 5 abgegeben. Das Arbeitsmedium kehrt durch Kapillarkräfte in den Bereich der Wärmequellen 3 zurück. Sofern ein Teilbereich des Wärmetauscherelementes 5 beispielsweise aus einem Metall mit einer besonders hohen Wärmeleitfähigkeit, insbesondere Kupfer oder Aluminium, hergestellt ist, ist die Kühleinrichtung 4 besonders leistungsfähig.

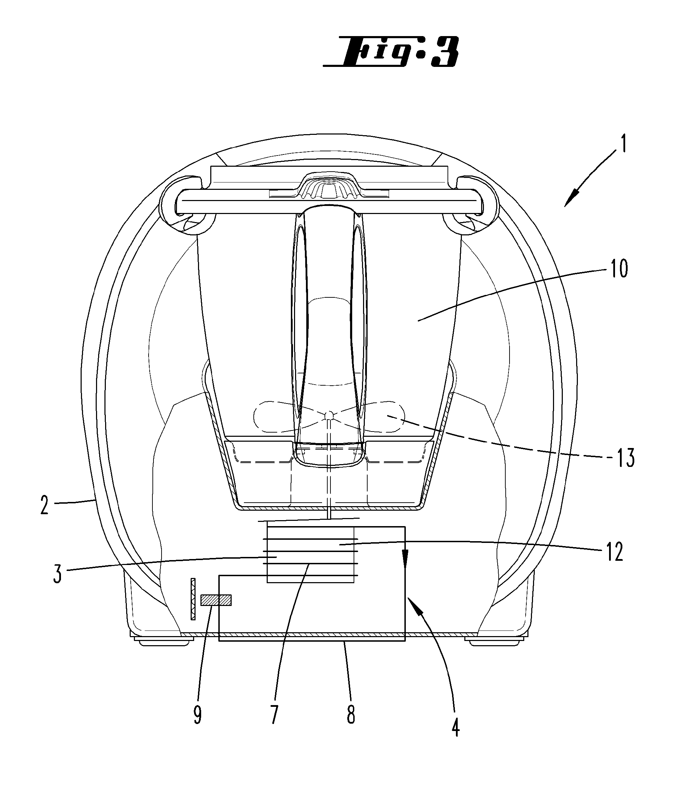

Gemäß dem in Figur 3 dargestellten Ausführungsbeispiel weist die Küchenmaschine 1 eine Kühleinrichtung 4 auf, welche einen Verdampfer 7, einen Verflüssiger 8 und ein Heizelement 9 beinhaltet. Insgesamt ist die Kühleinrichtung 4 als Absorptionskältemaschine ausgebildet. Der Verdampfer 7 ist in dem Bereich der Wärmequelle 3, hier ein Motor 12, angeordnet, wobei der Verdampfer 7 rohrförmig ausgebildet ist und schraubenförmig um die Wärmequelle 3 geführt ist. Der Verdampfer 7 ist mit dem Verflüssiger 8 verbunden, welcher einen Teil einer Außenfläche des Gehäuses 2 der Küchenmaschine 1 bildet. Das in dem Absorptionskältekreislauf der Kühleinrichtung 4 angeordnete Heizelement 9 ist ein separates Heizelement, welches unabhängig von der Wärme der Wärmequelle 3 funktioniert.

Die Kühleinrichtung 4 stellt einen Absorptionskältekreislauf zur Verfügung, welcher so funktioniert, dass das in dem Rohrsystem des Kreislaufs befindliche Arbeitsmedium, welches hier ein Wasser-Ammoniak-Gemisch ist, mittels des Heizelementes 9 erwärmt wird. Das Heizelement 9 kann beispielsweise als Induktionsheizung ausgebildet sein. Infolge der Erwärmung des Arbeitsmediums werden Ammoniak und Wasser voneinander getrennt und anschließend über verschiedene Rohrsysteme weitergeleitet. Zu einem Zeitpunkt, an welchem die Wärmequelle 3, nämlich hier der Motor 12, ausreichend Wärme erzeugt, kann das separate Heizelement 9 ausgeschaltet werden und die Erwärmung des Wasser-Ammoniak-Gemisches durch die Abwärme der Wärmequelle 3 selbst vorgenommen werden. Das Ammoniak wird in einem folgenden Schritt im Verflüssiger 8 verflüssigt. Dabei gibt der Verflüssiger 8 Wärme an die Umgebung ab. Anschließend wird das Ammoniak mittels des Verdampfers 7 wieder verdampft, so dass die im Bereich des Verdampfers 7 angeordnete Wärmequelle 3 gekühlt wird. Gemäß einer weiteren Ausführungsform wäre es denkbar, das separate Heizelement 9 vollständig wegzulassen. Gemäß dieser Ausführungsvariante funktioniert die Kühleinrichtung 4 erst dann, wenn die Wärmequellen 3 der Küchenmaschine 1, d.h. der Motor 12, Elektronik 11 und ähnliche wärmeerzeugende Elemente, ausreichend erwärmt sind, um den Absorptionskältekreislauf der Kühleinrichtung 4 zu betreiben.

### Bezugszeichenliste:

- 1: Küchenmaschine
- 2: Gehäuse
- 3: Wärmequelle
- 4: Kühleinrichtung
- 5: Wärmetauscherelement
- 6: wärmeübertragendes Element
- 7: Verdampfer
- 8: Verflüssiger
- 9: Heizelement
- 10: Gefäß
- 11: Elektronik
- 12: Motor
- 13: Rührwerk

## Patentansprüche

1. Küchenmaschine (1), insbesondere Mixgerät, mit einem Gehäuse (2), einer Wärmequelle (3), insbesondere einem Motor oder einer Geräteelektronik, und einer Kühleinrichtung (4), **dadurch gekennzeichnet, dass** die Wärmequelle (3) mit einem gesondert von dieser Wärmequelle (3) angeordneten, einen Teilbereich einer Außenfläche des Gehäuses (2) bildenden Wärmetauscherelement (5) der Kühleinrichtung (4) verbunden ist, wobei das Wärmetauscherelement (5) derart ausgebildet ist, dass es von der Wärmequelle (3) abzuführende Wärme durch natürliche Konvektion an die Umgebung abgeben kann.

2. Küchenmaschine (1) nach Anspruch 1, **dadurch gekennzeichnet, dass** das Wärmetauscherelement (5) eine Metallplatte aufweist.

3. Küchenmaschine (1) nach Anspruch 1 oder 2, **dadurch gekennzeichnet, dass** das Wärmetauscherelement (5) gehäuseförmig, insbesondere als einseitig offener Topf, ausgebildet ist, wobei die Wärmequelle (3) zumindest teilweise von dem gehäuseförmigen Wärmetauscherelement (5) umgeben ist.

4. Küchenmaschine (1) nach einem der vorhergehenden Ansprüche, **dadurch gekennzeichnet, dass** die Wärmequelle (3) mittels eines wärmeübertragenden Elementes (6), insbesondere eines wärmeleitenden Elementes oder eines Wärmerohres, mit dem Wärmetauscherelement (5) verbunden ist.

5. Küchenmaschine (1) nach Anspruch 5, **dadurch gekennzeichnet, dass** die Kühleinrichtung (4) eine Absorptionskältemaschine mit einem Verdampfer (7), einem Verflüssiger (8) und mindestens einem Heizelement (9) ist, wobei der Verdampfer (7) und der Verflüssiger (8) Teile des Wärmetauscherelementes (5) sind.

6. Küchenmaschine (1) nach Anspruch 6, **dadurch gekennzeichnet, dass** das Heizelement (9) ein separates, von der Wärmequelle (3) unabhängiges Element ist.

7. Küchenmaschine (1) nach Anspruch 5 oder 6, **dadurch gekennzeichnet, dass** der Verflüssiger (8) und/oder der Verdampfer (7) rohrförmig ausgebildet ist.

8. Küchenmaschine (1) nach einem der Ansprüche 5 bis 7, **dadurch gekennzeichnet, dass** der Verdampfer (7) einem Gefäß (10) der Küchenmaschine (1) derart zugeordnet ist, dass in dem Gefäß (10) enthaltene Speisen kühlbar sind.
